# EUROPEAN PATENT SPECIFICATION

(11) **EP 3 013 757 B1**
(45) Date of publication and mention of the grant of the patent: **12.02.2020**
(21) Application number: 14728608.2
(22) Date of filing: 22.05.2014
(51) Int. Cl.: C02F 3/12, C02F 3/20

(54) **WASTEWATER TREATMENT SYSTEM COMPRISING AN OUTER TANK AND AN INNER AERATION CHAMBER**
ABWASSERBEHANDLUNGSSYSTEM UMFASSEND EINEN ÄUSSEREN TANK UND EINE INNERE BELÜFTUNGSKAMMER
SYSTÈME DE TRAITEMENT D'EAUX USÉES CONTENANT UNE CUVE EXTÉRIEURE ET UNE CHAMBRE INTÉRIEURE D'AÉRATION

(30) Priority: 24.06.2013 GB 201311249; 19.09.2013 GB 201316618
(43) Date of publication of application: 04.05.2016
(73) Proprietor: WPL Limited, Waterlooville, Hampshire PO7 7UX (GB)
(72) Inventor: BAIRD, Andrew, Portsmouth Hampshire PO1 5DX (GB)
(74) Representative: Marles, Alan David
(86) International application number: PCT/GB2014/051584
(87) International publication number: WO 2014/207433

(56) References cited:
- WO-A1-2010/132877
- AU-B2- 696 976
- US-A1- 2007 095 737
- US-B1- 7 178 677

## Description

### FIELD OF THE INVENTION

The present invention relates to a wastewater treatment system and particularly to aerobic waste treatment systems suitable for use as a domestic sewage treatment system.

### BACKGROUND OF THE INVENTION

Traditionally wastewater (a combination of waste and water) has been collected in septic tanks within which anaerobic treatment of the wastewater occurred. More recently aerobic waste treatment systems have been developed in which the waste is broken down into carbon dioxide and water. In currently available wastewater treatment systems, the containment tanks are designed to accommodate waste for up to 12 months or more without the need for skimming or de-sludging. So even for the domestic market, the capacities of domestic containment tanks tend to be from 2,000 litres up to, for example, 20,000 litres.

In US 5441634 a tank that is suitable for either anaerobic or aerobic treatment of wastewater is described which provides for circulation of the wastewater within the tank. The tank contains an inverted funnel structure in combination with an effluent weir. The inverted funnel structure constricts upward flow of a gas borne mixture within the fluid enabling the mixture to be degassed so that any gas borne solids settle out of the mixture. The weir is used to keep the clear effluent isolated from the wastewater. However, US 54416340 is silent on the method of construction of the wastewater system and in particular how the funnel structure and the weir are mounted within the tank.

In WO 2010/132877 an alternative aerobic wastewater treatment system is described. The system generally comprises an outer tank containing an aeration chamber, a submerged aerator within a vertically extending tube and an effluent weir supporting a circumferentially extending scum baffle. The outer tank is preferably formed as a one-piece component using fiberglass reinforced plastic and includes an outwardly directed circumferential ledge intermediate the top and bottom of the tank. Moreover, a preferred embodiment of the system described in WO 2010/132877 has the effluent weir integrally formed with the outer tank.

In AU696976 a wastewater treatment system is described comprising a treatment tank with an inwardly tapering lower body portion; an aeration chamber having a cylindrical upper section and an inwardly tapering lower section; and a lid. The treatment tank, which is formed of concrete, includes an integral weir provided on the inside wall of the treatment tank. The aeration chamber is free-standing on support ribs within the treatment tank and includes a scum baffle mounted between the aeration chamber and the weir.

In US7178677 an aeration vessel for use in an aerobic wastewater treatment system is described. The aeration vessel comprises an inverted frusto-conical aeration partition mounted within an outer tank which is formed of two sections with the joint between the upper and lower sections being below the liquid level within the outer tank during use. The aeration partition and the upper and lower sections of the outer tank are each nestable.

For conventional wastewater treatment systems, the complexity of the internal structure of the wastewater treatment system means that on-site construction can be time-consuming and requires specialist tools. Moreover, in view of the volumetric capacity of the treatment system, storage and transportation of the outer tank, in particular, is expensive and wasteful of storage space.

### SUMMARY OF THE INVENTION

The present invention seeks to address problems encountered with conventional wastewater treatment systems and seeks to provide an improved wastewater treatment system which simplifies on-site construction and offers significant savings in transportation costs and the carbon footprint of the transportation.

The present invention provides a wastewater treatment system according to claim 1.

Thus, with the present invention the wastewater treatment system may be cheaply and efficiently transported and with a reduced transportation carbon footprint.

Ideally the outer tank of the wastewater treatment system is a unitary component which has substantially no internal structure unitary therewith.

Preferably the aeration chamber has a plurality of arms.

The at least one arm may include a lip at its free end adapted for engagement with the outer rim of the outer tank and the treatment system may additionally include one or more fixtures for each lip adapted to secure the lip to the outer tank. Ideally, the at least one arm is unitary with the aeration chamber.

In a particularly preferred embodiment the wastewater treatment system includes a draft tube with opposing first and second open ends, the draft tube including a plurality of fins extending radially outwardly from the tube wall intermediate its opposing first and second open ends. The free edge of each fin is preferably angled relative to the axis of the draft tube for engagement with the tapered inner surface of the aeration chamber wall.

Ideally the outer tank includes an inlet aperture and an outlet aperture and the treatment system further comprises a dip pipe adapted for engagement in the outlet aperture. This enables the wastewater treatment system to avoid having a weir or scum baffle.

The wastewater treatment system may further comprise a cover adapted to close the open end of the outer tank and adhesive tape for sealing the junction between the cover and the outer tank.

Additionally the wastewater treatment system preferably further comprises an air delivery system for delivering air to the bottom of the outer tank.

In a further aspect the present invention provides a kit for a wastewater treatment system according to claim 13.

### BRIEF DESCRIPTION OF THE DRAWINGS

Embodiments of the present invention will now be described with reference to the accompanying drawings, in which:
Figure 1 is a cut-away view of an embodiment of a wastewater treatment system in accordance with the present invention;

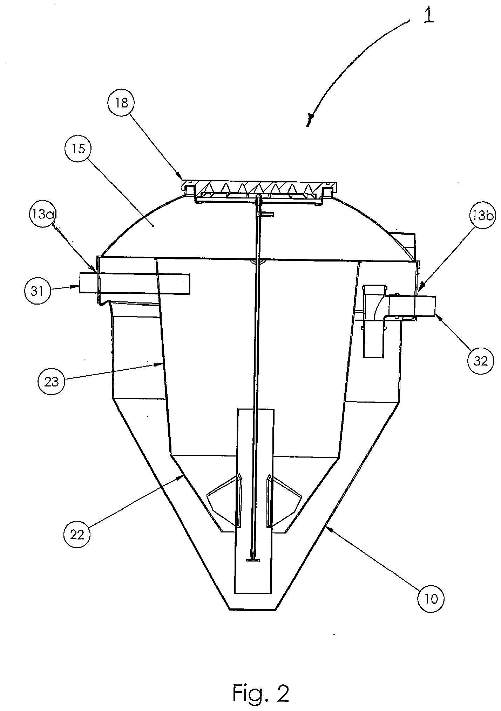

Figure 2 is a vertical sectional view through the wastewater treatment system of Figure 1;
Figure 3 is a first partial exploded view of the wastewater treatment system of Figure 1; and
Figure 4 is a second partial exploded view of the wastewater treatment system of Figure 1.

It is to be understood that the illustrated components in each figure are approximately to scale, however, the scale differs between the figures.

### DETAILED DESCRIPTION OF CERTAIN PREFERRED EMBODIMENTS

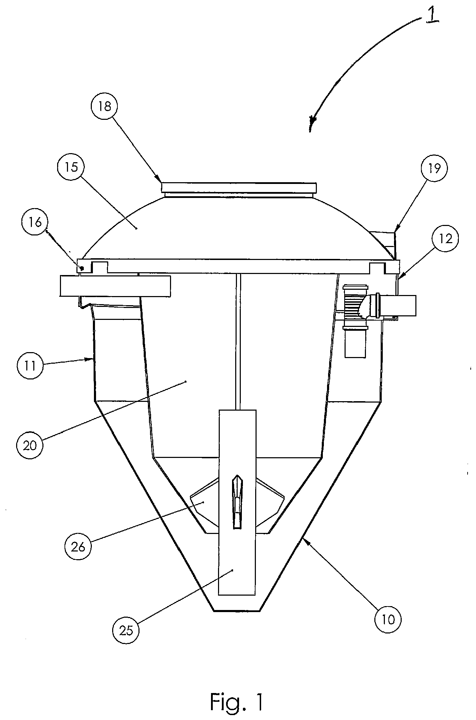

A first embodiment of a wastewater treatment system 1 is shown in Figure 1. The wastewater treatment system 1 generally comprises an outer tank or carcass 10, a cover 15 with a lid 18. An aeration chamber 20 is mounted within the carcass 10 and, in turn, has within it a draft tube 25 and a diffuser assembly 27 and 28. The treatment system 1 also includes an inlet or influent pipe 31 and an outlet or effluent pipe 32.
The carcass 10 is a unitary, one-piece component preferably, but not exclusively, formed of glass-reinforced plastic (GRP). The height of the carcass 10 (base to inlet pipe) is preferably between 1.5 m and 5 m, more preferably between 2 m and 3.8 m and has a maximum outside diameter between 1 m and 5 m, more preferably 1.5 m and 3.5 m. At these sizes the carcass 10 has a capacity of between 2,000 litres and 15,000 litres. The carcass 10 is generally symmetrical about a central vertically extending axis with a generally circular cross-section orthogonal to the central axis. The carcass 10 is open at its upper edge and at its bottom edge is closed with a base that is small relative to the diameter of its open upper edge. The carcass 10 comprises three sections: a lower section, an intermediate section 11 and an upper section 12. The wall profile of the lower section is generally an inverted cone with the internal diameter of the lower section increasing towards the upper edge. The intermediate section 11 extends upwardly from the top edge of the lower section and similarly has an inverted conical wall profile but with an opening angle (< 5°) which is significantly smaller than the opening angle of the lower section. The upper section 12, which extends upwardly from the top edge of the intermediate section 11, may also have an inverted conical wall profile or may be generally cylindrical. In both cases, however, the upper section 12 has a slightly larger internal diameter than the diameter of the intermediate section 11 at its top edge so that the junction between the intermediate section 11 and the upper section 12 is in the form of a circumferential shoulder. The upper section 12 also includes two apertures or ports 13a, 13b which are described in greater detail below. The upper rim 14 of the upper section 12 has the same or a slightly larger internal diameter in comparison to the diameter of the top edge of the intermediate section 11. Optionally the rim 14 also includes one or more circumferentially spaced notches (not shown) in the upper edge of the rim 14.

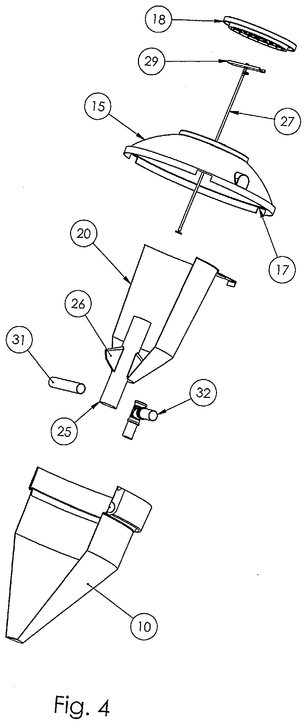

As may be more clearly seen in Figure 4, the carcass 10 has a completely free internal space with no integral internal structure or other internal projections. Also, the carcass 10 has a substantially smooth external surface with no structure(s) projecting outwardly from the outer wall of the carcass intermediate the ends of the carcass. As a result a plurality of identical carcasses 10 can be intimately stacked, one inside the other, for substantially the entire length of each carcass. Where the upper section 12 is generally cylindrical, a second carcass can be stacked within a first carcass with only the upper section of the second carcass projecting beyond the rim 14 of the first carcass. Alternatively where the upper section 12 is conical, even less of the second carcass may project beyond the rim of the first carcass.

The cover 15 is used to close the upper opening of the carcass 10 and preferably is domed. The cover has a lower rim 16 with a diameter sufficiently slightly greater than the diameter of the carcass rim 14 to provide a sliding fit between the carcass rim 14 and the cover rim 16. The cover rim 16 may also include one or more circumferentially spaced notches 17 which may be aligned with the notches in the carcass rim. The top of the cover 15 has a generally cylindrical aperture which is closed by a removable lid 18. The removable lid 18 is sized to provide access to the interior of the carcass 10 so that the cover 15 need not be removed after installation. The cover 15 may optionally include an access point 19 in the form of a frangible area which may be opened to provide an aperture for cabling, for example.

The aeration chamber 20 is preferably a unitary one-piece component formed of GRP and is substantially symmetrical about a vertically extending axis. The aeration chamber 20, which encloses a biologically active zone, is open at both its lower edge 21 and its upper edge 23, with the diameter of the lower edge opening 21 being smaller than the diameter of the upper edge opening 23. The aeration chamber 20 has an upper section 22a and a lower section 22b with each section 22a, 22b having a generally conical wall tapering towards the lower edge 21 of the chamber but with the opening angle of the lower section 22b being much greater than the opening angle of the upper section 22a.

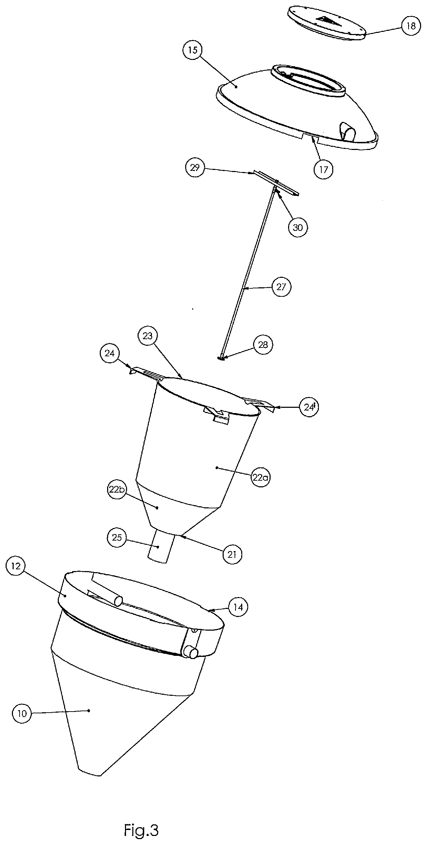

The aeration chamber 20 has a completely free internal space with an integral internal inner space with substantially no internal structure. Projecting radially outwardly from the upper edge 23 of the aeration chamber 20 are a plurality of arms 24 (three arms are shown in Figure 3. The free end of each arm 24 has in a downwardly directed lip 24' which is positioned at a radial position slightly greater than the radius of the rim 14 of the carcass 10. Moreover, preferably the lip 24' is sized to fit within the notches provided in the rim 14 and the notches in the rim 16 of the cover 15. The outer surface of the aeration chamber 20 has no structure(s) projecting outwardly from the surface of the aeration chamber intermediate its two ends, this means that a plurality of aeration chambers 20 can be intimately stacked, one inside the other for substantially the entire length of each aeration chamber.

The draft tube 25 is preferably formed of polyethylene and is substantially cylindrical with a diameter less than the diameter of the lower opening 21 of the aeration chamber 20. The draft tube 25 preferably has an axial length corresponding to at least 1.5 times the depth of the lower section 22b of the aeration chamber 20 and includes a plurality of outwardly projecting fins 26 (preferably three) circumferentially spaced around a central portion of the draft tube. Each of the fins 26 has an outer edge facing away from the central vertical axis and angled with respect to the central vertical axis so as to correspond with the tapering angle of the inner surface of the lower section 22b of the aeration chamber.

Optionally the inner surface of the lower section 22b may include a series of shallow grooves or shallow protrusions (not shown) that define slots for engagement with the outer edge of each of the fins 26 so as to ensure accurate alignment of the draft tube within the aeration chamber 20.

The diffuser 27 is a narrow hollow pipe for the delivery of gas, such as air, via a plurality of apertures in the diffuser head 28 to the bottom area of the wastewater treatment system. In use, the diffuser 27 is mounted within the draft tube 25 and is aligned with the central axis of the carcass 10. At the end of the diffuser remote from the diffuser head 28, a supporting bar or mounting bracket 29 is provided from which the diffuser 27 hangs downwardly and an air supply inlet 30 such as an air hose connector. The mounting bracket 29 is adapted to be mounted to the inner surface of the cover 15 using conventional securing devices such as, but not limited, to nuts and bolts or screws. Alternatively the mounting bracket may be integral with the cover 15.

As mentioned earlier, the upper section 12 of the carcass includes two circular apertures 13a, 13b circumferentially spaced from one another and preferably circumferentially opposing each other. Also, ideally a first one of the apertures 13a is positioned higher (closer to the upper rim of the carcass) than the second aperture 13b. The apertures 13a, 13b are sized preferably to receive conventional influent 31 and effluent 32 pipes respectively and each aperture may additionally include a grommet or alternative sealing device for providing a fluid-tight seal between the edge of the aperture and the influent / effluent pipes. Ideally, the effluent pipe 32 is a dip pipe or swept tee pipe with the inlet of the dip pipe extending downwardly into the region enclosed by the intermediate section 11 of the carcass.

As both the carcasses and the aeration chambers have no internal or external structures projecting away from their walls intermediate the opposing ends of the carcass and the aeration chamber, the carcass and the aeration chamber are stackable and 20-30 stacked wastewater treatment systems can be stored in a standard 40 ft. transportation container. This represents a significant saving in transportation costs and transportation carbon footprint in comparison with conventional wastewater treatment systems where a standard 40 ft. transportation container could only accommodate 5 equivalent wastewater treatment systems.

In use, the wastewater treatment system 1 is buried into the ground so that preferably only the lid 18 remains exposed and with the influent pipe connected to the sewage pipes of an adjacent sewage supply in a manner similar to conventional wastewater treatment systems. The diffuser 27 is connected to a supply of air via the air inlet 30 so as to feed air to the bottom of the treatment system. Sewage is fed into the interior of the aeration chamber 20 via the influent pipe 31. Within the draft tube 25 solid waste is mixed and lifted by the action of air supplied by the diffuser 27 into the aeration chamber 20 where oxygenation of the water encourages microbial activity to treat the waste trapped in the aeration chamber 20. Water which is substantially free of solid waste is able to escape from the aeration chamber 20 to the region between the aeration chamber and the carcass where it flows out from the wastewater treatment system via the effluent pipe 32. By using a dip pipe as the effluent pipe 32 the wastewater treatment system does not require and does not have a weir or scum baffle.

Due to the size of the carcass, construction of the wastewater treatment system 1 can be, but not exclusively, performed on-site. However, in contrast to conventional wastewater treatment systems, construction of the system described herein is significantly faster and easier. The treatment system 1 is designed to enable construction by one person and requires only a conventional screw driver or no tools. Construction is performed as follows:
a) The aeration chamber 20 is positioned concentrically inside the carcass 10 with each arm 24 engaging with a respective notch in the rim 14 of the carcass and the influent pipe aperture aligned with the aperture 13a in the carcass rim;
b) the lip 24' of each arm 24 is secured to the rim 14 using conventional fixings such as, but not limited to, a screw fitment, nut and bolt or fir tree plug;
c) the draft tube 25 is inserted into the aeration chamber 20 so as to be concentrically aligned with the aeration chamber and the carcass;
d) grommets are positioned into each aperture 13a, 13b in the upper section 12 of the carcass;
e) the influent pipe 32 is inserted into the grommet in the aperture 13a and is pushed through so that it extends from the outside of the carcass through the aligned aperture in the aeration chamber to the interior of the aeration chamber;
f) the effluent dip pipe 32 is positioned between the outer surface of the aeration chamber 20 and the inner surface of the carcass 10 with the outlet pipe pushed through the grommet in the aperture 13b to project outwardly from the carcass;
g) the cover 15 is placed over the carcass opening with the rim 16 of the cover engaging with the outer surface of the rim 14 of the carcass and with the notches 17 in the rim 16 aligned and engaging with the arms 24 of the aeration chamber;
h) the external junction of the cover 15 and the carcass 10 is then sealed using, for example, a structural adhesive tape or glass-reinforced plastic;
i) the supporting bracket 29 of the diffuser 27 is attached to the cover 15 and the lid is secured to the opening in the cover 15.

The construction steps itemized above can be performed easily by a single person in 10-15 mins. This strongly contrasts with the construction of a conventional wastewater treatment system which normally requires a minimum of two people and can take 90 mins or more for the construction to be complete.

An additional optional feature is a pump chamber (not shown in the drawings) that may be mounted internally at or close to the rim 14 of the carcass 10. The pump chamber is used to house a pump mechanism, if required, and can be mounted to the carcass 10 using inter-engagement between one or more unitary constructional features of the carcass structure and one or more unitary constructional features of the pump chamber structure. In other words the pump chamber can be mounted to the carcass 10 without using any separate fixing components.

From above description it can be seen that the present invention provides an improved wastewater treatment system that is easier and quicker to construct and, being stackable, can be transported more efficiently and much more cheaply than conventional treatment systems.

It will be apparent that various modifications and/or additions may be made to the particular embodiments described herein without departing from the scope of the invention as defined in the accompanying claims.

## Claims

1. A wastewater treatment system comprising an outer tank (10) open at one end (14) and an inner aeration chamber (20) which is open at first (21) and second (23) opposing ends, the outer tank (10) generally increasing in internal diameter towards its open end wherein the outer tank (10) is intimately stackable with other substantially identical outer tanks for substantially its entire length and the aeration chamber (20) has substantially no internal or external structure projecting away from its wall intermediate the first and second ends
**characterised in that** the outer tank (10) has substantially no internal structure; the aeration chamber (20) generally increases in internal diameter from its first end (21) to its opposing second end (23) and is intimately stackable with other substantially identical aeration chambers for substantially its entire length; and the inner aeration chamber (20) includes at least one arm (24) extending radially outwardly from the second end (23) of the inner aeration chamber (20), the at least one arm (24) engaging the open end (14) of the outer tank (10).

2. The wastewater treatment system as claimed in claim 1, wherein the outer tank (10) is a unitary component and has substantially no internal structure unitary therewith.

3. The wastewater treatment system as claimed in claim 1, wherein the aeration chamber (20) has a plurality of arms (24) extending radially outwardly from the second end (23) of the aeration chamber (20) and engaging the open end (14) of the outer tank (10).

4. The wastewater treatment system as claimed in claim 1 or 3, wherein the at least one arm (24) includes a lip (24') at its free end engaging a rim at the open end (14) of the outer tank (10) and the wastewater treatment system further includes one or more fixtures for each lip (24') securing the lip (24') to the rim of the outer tank (10).

5. The wastewater treatment system as claimed in any one of claims 1 to 4, wherein the at least one arm (24) is unitary with the aeration chamber (20).

6. The wastewater treatment system as claimed in any one of the preceding claims, further comprising a draft tube (25) with opposing first and second open ends, the draft tube (25) including a plurality of fins (26) extending radially outwardly from the tube wall intermediate its opposing first and second open ends.

7. The wastewater treatment system as claimed in claim 6, wherein the free edge of each fin (26) is angled relative to the axis of the draft tube (25) and engages the tapered inner surface of the aeration chamber wall (20).

8. The wastewater treatment system as claimed in any one of the preceding claims, wherein the outer tank (10) includes an inlet aperture (13a) and an outlet aperture (13b) and the wastewater treatment system further includes a dip pipe (32) in engagement with the outlet aperture (13b).

9. The wastewater treatment system as claimed in any one of the preceding claims, wherein the treatment system has no weir.

10. The wastewater treatment system as claimed in any one of the preceding claims, wherein the treatment system has no scum baffle.

11. The wastewater treatment system as claimed in any one of the preceding claims, further comprising a cover (15) closing the open end of the outer tank (10) and adhesive tape sealing the junction between the cover (15) and the outer tank (10).

12. The wastewater treatment system as claimed in any one of the preceding claims, further comprising an air delivery system (27) for delivering air to the bottom of the outer tank (10).

13. A kit for the wastewater treatment system according to any one of claims 1 to 12, the kit comprising an outer tank (10) open at one end (14) and an inner aeration chamber (20) which is open at first (21) and second (23) opposing ends, the outer tank (10) generally increasing in internal diameter towards its open end (14) wherein the outer tank (20) is intimately stackable with other substantially identical outer tanks for substantially its entire length and the aeration chamber (20) has substantially no internal or external structure projecting away from its wall intermediate the first and second ends
**characterised in that** the outer tank (10) has substantially no internal structure; the aeration chamber (20) generally increases in internal diameter from its first end (21) to its opposing second end (23) and is intimately stackable with other substantially identical aeration chambers for substantially its entire length; and the inner aeration chamber (20) includes at least one arm (24) extending radially outwardly from the second end (23) of the inner aeration chamber (20), that at least one arm (24) being adapted for engagement with the open end (14) of the outer tank (10).

## Patentansprüche

1. Abwasserbehandlungssystem, das Folgendes umfasst:
einen Außentank (10), der an einem Ende (14) offen ist, und eine innere Belüftungskammer (20), die an einem ersten (21) und einem gegenüberliegenden zweiten (23) Ende offen ist,
wobei sich der Innendurchmesser des Außentanks (10) in Richtung auf sein offenes Ende allgemein vergrößert, wobei der Außentank (10) mit anderen im Wesentlichen identischen Außentanks im Wesentlichen über seine gesamte Länge innig stapelbar ist und die Belüftungskammer (20) im Wesentlichen keine innere oder äußere Struktur hat, die von ihrer Wand zwischen dem ersten und zweiten Ende wegragt,
**dadurch gekennzeichnet, dass** der Außentank (10) im Wesentlichen keine innere Struktur hat; die Belüftungskammer (20) sich mit Bezug auf ihren Innendurchmesser von ihrem ersten Ende (21) zu ihrem gegenüberliegenden zweiten Ende (23) allgemein vergrößert und mit anderen im Wesentlichen identischen Belüftungskammern im Wesentlichen über ihre gesamte Länge innig stapelbar ist; und die innere Belüftungskammer (20) wenigstens einen Arm (24) aufweist, der sich vom zweiten Ende (23) der inneren Belüftungskammer (20) radial nach außen erstreckt, wobei der wenigstens eine Arm (24) am offenen Ende (14) des Außentanks (10) eingreift.

2. Abwasserbehandlungssystem nach Anspruch 1, wobei der Außentank (10) eine einheitliche Komponente ist und im Wesentlichen keine einheitlich damit ausgebildete innere Struktur hat.

3. Abwasserbehandlungssystem nach Anspruch 1, wobei die Belüftungskammer (20) mehrere Arme (24) hat, die sich vom zweiten Ende (23) der Belüftungskammer (20) radial nach außen erstrecken und am offenen Ende (14) des Außentanks (10) eingreifen.

4. Abwasserbehandlungssystem nach Anspruch 1 oder 3, wobei der wenigstens eine Arm (24) an seinem freien Ende eine Lippe (24') aufweist, die an einem Rand am offenen Ende (14) des Außentanks (10) eingreift, und das Abwasserbehandlungssystem ferner eine oder mehrere Halterungen für jede Lippe (24') beinhaltet, die die Lippe (24') am Rand des Außentanks (10) befestigen.

5. Abwasserbehandlungssystem nach einem der Ansprüche 1 bis 4, wobei der wenigstens eine Arm (24) mit der Belüftungskammer einheitlich ausgebildet ist.

6. Abwasserbehandlungssystem nach einem der vorhergehenden Ansprüche, das ferner ein Saugrohr (25) mit gegenüberliegenden ersten und zweiten offenen Enden umfasst, wobei das Saugrohr (25) mehrere Rippen (26) aufweist, die sich von der Rohrwand zwischen seinen gegenüberliegenden ersten und zweiten offenen Enden radial nach außen erstrecken.

7. Abwasserbehandlungssystem nach Anspruch 6, wobei die freie Kante jeder Rippe (26) mit Bezug auf die Achse des Saugrohres (25) abgewinkelt ist und mit der konisch zulaufenden Innenfläche der Belüftungskammerwand (20) in Eingriff kommt.

8. Abwasserbehandlungssystem nach einem der vorhergehenden Ansprüche, wobei der Außentank (10) eine Einlassöffnung (13a) und eine Auslassöffnung (13b) aufweist und das Abwasserbehandlungssystem ferner ein Tauchrohr (32) im Eingriff mit der Auslassöffnung (13b) beinhaltet.

9. Abwasserbehandlungssystem nach einem der vorhergehenden Ansprüche, wobei das Behandlungssystem kein Wehr hat.

10. Abwasserbehandlungssystem nach einem der vorhergehenden Ansprüche, wobei das Behandlungssystem keinen Schwimmschlammabstreifer hat.

11. Abwasserbehandlungssystem nach einem der vorhergehenden Ansprüche, das ferner eine Abdeckung (15), die das offene Ende des Außentanks (10) verschließt, und ein Klebeband umfasst, das die Verbindungsstelle zwischen der Abdeckung (15) und dem Außentank (10) abdichtet.

12. Abwasserbehandlungssystem nach einem der vorhergehenden Ansprüche, das ferner ein Luftzuführungssystem (27) zum Zuführen von Luft zum Boden des Außentanks (10) umfasst.

13. Bausatz für ein Abwasserbehandlungssystem nach einem der Ansprüche 1 bis 12, wobei der Bausatz Folgendes umfasst: einen Außentank (10), der an einem Ende (14) offen ist, und eine innere Belüftungskammer (20), die an einem ersten (21) und einem gegenüberliegenden zweiten (23) Ende offen ist, wobei sich der Innendurchmesser des Außentanks (10) in Richtung auf sein offenes Ende (14) allgemein vergrößert, wobei der Außentank (10) mit anderen im Wesentlichen identischen Außentanks im Wesentlichen über seine gesamte Länge innig stapelbar ist und die Belüftungskammer (20) im Wesentlichen keine innere oder äußere Struktur hat, die von ihrer Wand zwischen dem ersten und zweiten Ende wegragt,
**dadurch gekennzeichnet, dass** der Außentank (10) im Wesentlichen keine innere Struktur hat; die Belüftungskammer (20) sich mit Bezug auf ihren Innendurchmesser von ihrem ersten Ende (21) zu ihrem gegenüberliegenden zweiten Ende (23) allgemein vergrößert und mit anderen im Wesentlichen identischen Belüftungskammern im Wesentlichen über ihre gesamte Länge innig stapelbar ist; und die innere Belüftungskammer (20) wenigstens einen Arm (24) aufweist, der sich vom zweiten Ende (23) der inneren Belüftungskammer (20) radial nach außen erstreckt, wobei der wenigstens eine Arm (24) am offenen Ende (14) des Außentanks (10) eingreift.

## Revendications

1. Système de traitement d'eaux usées contenant une cuve extérieure (10) ouverte au niveau d'une extrémité (14) et une chambre intérieure d'aération (20) ouverte au niveau de première (21) et seconde (23) extrémités opposées, le diamètre interne de la cuve extérieure (10) augmentant généralement en direction de son extrémité ouverte, dans lequel la cuve extérieure (10) peut être empilée étroitement avec d'autres cuves extérieures essentiellement identiques sur essentiellement toute sa longueur, et la chambre d'aération (20) ne comporte essentiellement aucune structure interne ou externe faisant saillie de sa paroi entre les première et seconde extrémités,
**caractérisé en ce que** la cuve extérieure (10) ne comporte essentiellement aucune structure interne ; le diamètre interne de la chambre d'aération (20) augmente généralement de sa première extrémité (21) à sa seconde extrémité opposée (23), et la chambre d'aération peut être empilée étroitement avec d'autres chambres d'aération essentiellement identiques sur essentiellement toute sa longueur; et la chambre intérieure d'aération (20) comprend au moins un bras (24) s'étendant radialement vers l'extérieur à partir de la seconde extrémité (23) de la chambre intérieure d'aération (20), ledit bras (24) entrant en prise avec l'extrémité ouverte (14) de la cuve extérieure (10).

2. Système de traitement d'eaux usées selon la revendication 1, dans lequel la cuve extérieure (10) est un composant formé d'un seul tenant et ne comporte essentiellement aucune structure interne formée d'un seul tenant avec celle-ci.

3. Système de traitement d'eaux usées selon la revendication 1, dans lequel la chambre d'aération (20) comporte une pluralité de bras (24) s'étendant radialement vers l'extérieur à partir de la seconde extrémité (23) de la chambre d'aération (20) et entrant en prise avec l'extrémité ouverte (14) de la cuve extérieure (10).

4. Système de traitement d'eaux usées selon la revendication 1 ou 3, dans lequel ledit bras (24) comprend une lèvre (24') au niveau de son extrémité libre entrant en prise avec un rebord au niveau de l'extrémité ouverte (14) de la cuve extérieure (10), et le système de traitement d'eaux usées comprend en outre une ou plusieurs fixations pour chaque lèvre (24') fixant la lèvre (24') au rebord de la cuve extérieure (10).

5. Système de traitement d'eaux usées selon l'une quelconque des revendications 1 à 4, dans lequel ledit bras (24) est formé d'un seul tenant avec la chambre d'aération (20).

6. Système de traitement d'eaux usées selon l'une quelconque des revendications précédentes, contenant en outre un tuyau de descente (25) comportant des première et seconde extrémités ouvertes opposées, le tuyau de descente (25) comprenant une pluralité d'ailettes (26) s'étendant radialement vers l'extérieur à partir de la paroi de tuyau entre ses première et seconde extrémités ouvertes opposées.

7. Système de traitement d'eaux usées selon la revendication 6, dans lequel le bord libre de chaque ailette (26) forme un angle avec l'axe du tuyau de descente (25) et entre en prise avec la surface intérieure conique de la paroi de chambre d'aération (20).

8. Système de traitement d'eaux usées selon l'une quelconque des revendications précédentes, dans lequel la cuve extérieure (10) comprend une ouverture d'admission (13a) et une ouverture de sortie (13b), et le système de traitement d'eaux usées comprend en outre un tuyau plongeur (32) en prise avec l'ouverture de sortie (13b).

9. Système de traitement d'eaux usées selon l'une quelconque des revendications précédentes, dans lequel le système de traitement ne comporte aucun déversoir.

10. Système de traitement d'eaux usées selon l'une quelconque des revendications précédentes, dans lequel le système de traitement ne comporte aucun pare-écume.

11. Système de traitement d'eaux usées selon l'une quelconque des revendications précédentes, contenant en outre un couvercle (15) fermant l'extrémité ouverte de la cuve extérieure (10) et un ruban adhésif scellant la jonction entre le couvercle (15) et la cuve extérieure (10).

12. Système de traitement d'eaux usées selon l'une quelconque des revendications précédentes, contenant en outre un système d'amenée d'air (27) permettant d'amener de l'air au fond de la cuve extérieure (10).

13. Kit pour système de traitement d'eaux usées selon l'une quelconque des revendications 1 à 12, le kit contenant une cuve extérieure (10) ouverte au niveau d'une extrémité (14) et une chambre intérieure d'aération (20) ouverte au niveau des première (21) et seconde (23) extrémités opposées, le diamètre interne de la cuve extérieure (10) augmentant généralement en direction de son extrémité ouverte (14), dans lequel la cuve extérieure (20) peut être empilée étroitement avec d'autres cuves extérieures essentiellement identiques sur essentiellement toute sa longueur, et la chambre d'aération (20) ne comporte essentiellement aucune structure interne ou externe faisant saillie de sa paroi entre les première et seconde extrémités,
**caractérisé en ce que** la cuve extérieure (10) ne comporte essentiellement aucune structure interne ; le diamètre interne de la chambre d'aération (20) augmente généralement de sa première extrémité (21) à sa seconde extrémité opposée (23), et la chambre d'aération peut être empilée étroitement avec d'autres chambres d'aération essentiellement identiques sur essentiellement toute sa longueur; et la chambre intérieure d'aération (20) comprend au moins un bras (24) s'étendant radialement vers l'extérieur à partir de la seconde extrémité (23) de la chambre intérieure d'aération (20), ledit bras (24) étant conçu pour entrer en prise avec l'extrémité ouverte (14) de la cuve extérieure (10).
